# EUROPEAN PATENT APPLICATION

(11) **EP 2 355 529 A2**
(43) Date of publication of application: **10.08.2011**
(21) Application number: 11152984.8
(22) Date of filing: 02.02.2011
(51) Int. Cl.: H04N 13/00

(54) **Method and apparatus for 3-dimensional image processing in communication device**

(30) Priority: 04.02.2010 KR 20100010335
(71) Applicant: SAMSUNG ELECTRONICS CO., LTD., Suwon-si, Gyeonggi-do (KR)
(72) Inventor: Kwon, Seong-Geun, Gyeonggi-do Suwon-si, (KR); Kim, Soon-Jin, Gyeonggi-do Suwon-si (KR); Kwon, Ki-Ryong, Gyeonggi-do, Suwon-si (KR); Lee, Suk-Hwan, Gyeonggi-do Suwon-si (KR)
(74) Representative: van Westenbrugge, Andries

(57) **Abstract**

An apparatus and a method for 3-Dimensional (3D) image processing in a communication device are provided. The method includes obtaining an original image for providing a 3D image digital multimedia broadcasting service, setting the original image provided from the controller into a right-side image and generating a left-side image which differs from the right-side image, converting the left-side image and the right-side image into a side-by-side format image by combining the left-side image and the right-side image, dividing each of the combined two images into a plurality of blocks, determining a search region for each of the divided blocks within an image, and estimating a motion vector of each block based on the search region.

## Description

### BACKGROUND OF THE INVENTION

### 1. Field of the Invention:

The present invention relates to a method and an apparatus for 3-Dimensional (3D) image processing in a communication device. More particularly, the present invention relates to a method and an apparatus for processing an image transmitted for 3D image digital multimedia broadcasting.

### 2. Description of the Related Art:

With the development of communication and broadcasting technologies, mobile multimedia broadcasting services are now provided. Mobile multimedia broadcasting services allow users to be able to receive high-quality radio, Television (TV), video, and teletext broadcasting anytime and anywhere while travelling.

Currently available digital broadcasting services can be roughly classified into a terrestrial Digital Multimedia Broadcasting (DMB) service and a satellite DMB service according to a transmission mechanism and a network configuration. In addition thereto, various services are provided, such as Digital Audio Broadcasting (DAB), In-Band On-Channel (IBOC), Integrated Services Digital Broadcasting-Terrestrial (ISDB-T), Digital Video Broadcasting-Terrestrial (DVB-T), Digital Video Broadcasting-Handheld (DVB-H), etc.

A technique of processing a binocular-type 3-Dimensional (3D) image consisting of left-side and right-side images has been recently developed and attempted to be combined with digital multimedia broadcasting. That is, a broadcasting center transmits left-side and right-side images constituting an original image which is a 3D image source to a user terminal in order to provide a 3D image broadcasting service, and the user terminal generates a 3D image by overlapping the left-side and right-side images on one screen.

However, the method of providing the 3D image digital multimedia broadcasting service of the related art uses the same video encoder as that used in 2-Dimensional (2D) image encoding, which leads to a problem of service quality deterioration.

Therefore, a need exists for a method and an apparatus for 3D image processing in a communication device.

### SUMMARY OF THE INVENTION

An aspect of the present invention is to address at least the above-mentioned problems and/or disadvantages and to provide at least the advantages described below. Accordingly, an aspect of the present invention is to provide a method and an apparatus for 3-Dimensional (3D) image processing in a communication device.

Another aspect of the present invention is to provide a method and an apparatus for performing image processing on a left-side image and a right-side image which constitute a 3D image in a communication device.

Another aspect of the present invention is to provide a method and an apparatus for providing a motion vector estimation region of left-side and right-side images constituting a 3D image in a communication device.

In accordance with an aspect of the present invention, a method for 3D image processing in a communication device is provided. The method includes obtaining an original image for providing a 3D image digital multimedia broadcasting service, generating right-side image and left-side image having binocular disparity from the original image, converting the left-side image and the right-side image into a side-by-side format image by combining the left-side image and the right-side image, dividing each of the combined two images into a plurality of blocks, determining a search region for each of the divided blocks within an image, and estimating a motion vector of each block based on the search region.

In accordance with another aspect of the present invention, an apparatus for 3D image processing in a communication device is provided. The apparatus includes a controller for obtaining an original image for providing a 3D image digital multimedia broadcasting service, and an image processor for generating right-side image and left-side image having binocular disparity from the original image, for converting the left-side image and the right-side image into a side-by-side format image by combining the left-side image and the right-side image, for dividing each of the combined two images into a plurality of blocks, for determining a search region for each of the divided blocks within an image, and for estimating a motion vector of each block based on the search region.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following detailed description taken in conjunction with the accompanying drawings, in which:

FIG. 1 is a block diagram illustrating a structure of a communication device according to an exemplary embodiment of the present invention;

FIG. 2 is a flowchart illustrating a process of operating a communication device according to an exemplary embodiment of the present invention; and

FIG. 3 is a diagram illustrating a motion vector estimation region for left-side and right-side images in a communication device according to an exemplary embodiment of the present invention.

Throughout the drawings, like reference numerals will be understood to refer to like parts, components, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, descriptions of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention are provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

By the term "substantially" it is meant that the recited characteristic, parameter, or value need not be achieved exactly, but that deviations or variations, including for example, tolerances, measurement error, measurement accuracy limitations and other factors known to those of skill in the art, may occur in amounts that do not preclude the effect the characteristic was intended to provide.

Exemplary embodiments of the present invention described below relate to a method and an apparatus for encoding a left-side image and a right-side image which constitute a 3-Dimensional (3D) image in a communication device. For convenience of explanation, it is assumed hereinafter that an original image for the 3D image is the right-side image, and the left-side image is generated based on the right-side image.

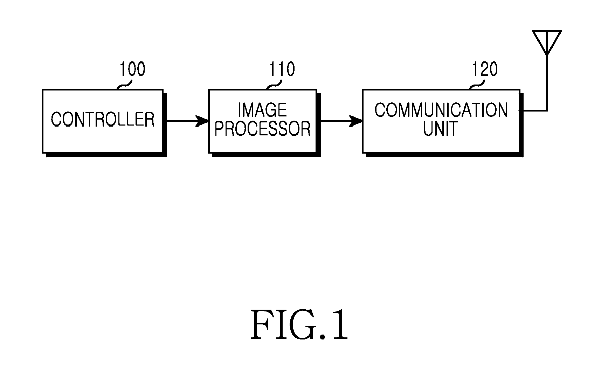

FIGs. 1 through 3, discussed below, and the various exemplary embodiments used to describe the principles of the present disclosure in this patent document are by way of illustration only and should not be construed in any way that would limit the scope of the disclosure. Those skilled in the art will understand that the principles of the present disclosure may be implemented in any suitably arranged communications system. The terms used to describe various embodiments are exemplary. It should be understood that these are provided to merely aid the understanding of the description, and that their use and definitions in no way limit the scope of the invention. Terms first, second, and the like are used to differentiate between objects having the same terminology and are in no way intended to represent a chronological order, unless where explicitly state otherwise. A set is defined as a non-empty set including at least one element.

FIG. 1 is a block diagram illustrating a structure of a communication device according to an exemplary embodiment of the present invention.

Referring to FIG. 1, a communication device includes a controller 100, an image processor 110, and a communication unit 120.

The controller 100 controls and processes an overall operation of the communication device, and controls image processing for providing a 3D digital multimedia broadcasting service. The controller 100 obtains an original image for providing the 3D image digital multimedia broadcasting service from an external or internal storage unit (not shown), and provides the original image to the image processor 110.

The image processor 110 encodes an image signal in a predefined manner, or decodes encoded frame image data into original frame image data. More particularly, the image processor 110 sets the original image provided from the controller 100 into a right-side image, and generates a left-side image which differs from the right-side image due to binocular disparity. The image processor 110 samples the left-side image and the right-side image, combines the sampled left-side image and right-side image, and converts the combined image into a side-by-side format image. Thereafter, the image processor 110 performs encoding by estimating a motion vector for each of the left-side and right-side images. In this case, in the estimating of the motion vector for each of the two images according to an exemplary embodiment of the present invention, the image processor 110 limits a search region for estimating the motion vector of each image to a region of a specific image. That is, since the sampled left-side and right-side images are arranged side by side in the image of the side-by-side format, the search region for estimating the motion vector of a specific region from the right-side image may include some regions of the left-side image, which may deteriorate efficiency of motion vector estimation and quality of the 3D image. Therefore, the image processor 110 limits a motion vector search region of the right-side image to include only regions of the right-side image, and limits a motion vector search region of the left region to include only regions of the left-side image. In this case, the image processor 110 may determine the motion vector search region by using the method of the related art. When the search region determined by the method of the related art includes a region of a different image, the region of the different image may be excluded from the search region. For example, the search region for motion vector estimation of a particular vector in the right-side image may be determined for each neighboring block, and if some of the neighboring blocks are blocks included in the left-side image, the neighboring blocks included in the left-side image may be excluded from the search region.

The image processor 110 estimates a motion vector for each of the left-side and right-side images, encodes the two images according to a pre-set scheme by using the estimated motion vector, and then provides the encoded images to the communication unit 120.

The communication unit 120 transmits/receives a wired or wireless signal to/from other nodes, and controls and processes a function for transmitting a signal for 3D image digital multimedia broadcasting to a user terminal.

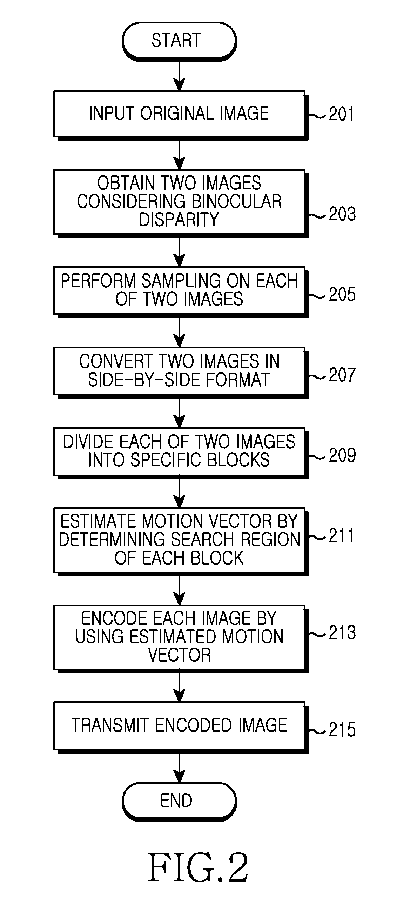

FIG. 2 is a flowchart illustrating a process of operating a communication device according to an exemplary embodiment of the present invention.

Referring to FIG. 2, when an original image for 3D image digital multimedia broadcasting is input in step 201, proceeding to step 203, the communication device generates one image which differs from the original image due to binocular disparity, and thus two images are present. In this case, the communication device determines the original image as a right-side image, and determines the generated image, which has the binocular disparity with respect to the original image, as the left-side image.

In step 205, the communication device performs sampling on each of the two images. In step 207, the communication device combines the two sampled images and converts the images into a side-by-side format image.

In step 209, to estimate a motion vector for each of the two images, the communication device divides each image into a specific number of blocks having any size. In step 211, the communication device estimates a motion vector by determining a search region for each of the divided blocks. In this case, the communication device limits the search region for each block to include only a region of a specific image according to an exemplary embodiment of the present invention.

In step 213, the communication device encodes the two images by using the motion vector estimation result according to a predefined scheme. In step 215, the communication device transmits the encoded image to the user terminal. Thereafter, the procedure of FIG. 2 ends.

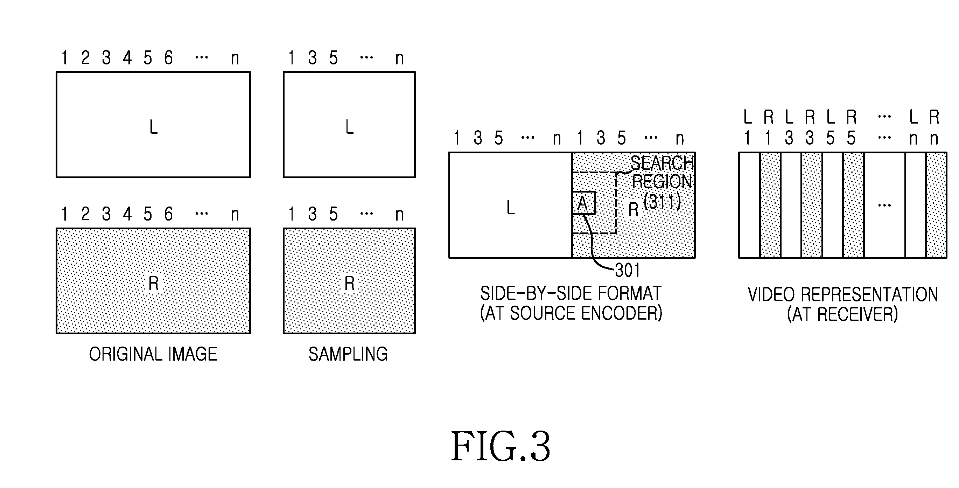

FIG. 3 is a diagram illustrating a motion vector estimation region for left-side and right-side images in a communication device according to an exemplary embodiment of the present invention.

Referring to FIG. 3, in the motion vector estimation region, if it is assumed that the sampled right-side image and left-side image are converted into the side-by-side format image and thereafter each image is divided into a plurality of blocks having any size, a search region 311 for estimating the motion vector of a block A 301 included in the right-side image is limited to include only regions of the right-side image while not including regions of the left-side image. Of course, the communication device limits a search region of a specific block to include only the regions of the left-side image even in a process of estimating the motion vector of each block included in the left-side image.

According to exemplary embodiments of the present invention, when encoding is performed on a left-side image and a right-side image for a 3D image broadcasting service, a motion vector estimation region of the left-side image and the right-side image is limited so that a motion vector for a specific image is estimated only in a region of the specific image. Therefore, there is an advantage in that image quality is improved.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method for 3-Dimensional (3D) image processing in a communication device, the method comprising:
obtaining an original image for providing a 3D image digital multimedia broadcasting service;
generating right-side image and left-side image having binocular disparity from the original image;
converting the left-side image and the right-side image into a side-by-side format image by combining the left-side image and the right-side image;
dividing each of the combined two images into a plurality of blocks;
determining a search region for each of the divided blocks within an image; and
estimating a motion vector of each block based on the search region.

2. The method of claim 1, further comprising limiting the motion vector search region of the right-side image to include only regions of the right-side image and limiting the motion vector search region of the left region to include only regions of the left-side image.

3. The method of claim 1, wherein the determining of the search region comprises:
determining the search region for each neighboring block; and
if some of the neighboring blocks belong to a different image, excluding the blocks belonging to the different image from the search region.

4. The method of claim 1, further comprising:
encoding the two images by using the estimated motion vector; and
transmitting a result of the encoding.

5. An apparatus for 3-Dimensional (3D) image processing in a communication device, the apparatus comprising:
a controller for obtaining an original image for providing a 3D image digital multimedia broadcasting service; and
an image processor for generating right-side image and left-side image having binocular disparity from the original image, for converting the left-side image and the right-side image into a side-by-side format image by combining the left-side image and the right-side image, for dividing each of the combined two images into a plurality of blocks, for determining a search region for each of the divided blocks within an image, and for estimating a motion vector of each block based on the search region.

6. The apparatus of claim 5, wherein the image processor limits the motion vector search region of the right-side image to include only regions of the right-side image and limits the motion vector search region of the left region to include only regions of the left-side image.

7. The apparatus of claim 5, wherein the image processor determines the search region for each neighboring block, and if some of the neighboring blocks belong to a different image, excludes the blocks belonging to the different image from the search region.

8. The apparatus of claim 5, wherein the image processor encodes and outputs the two images by using the estimated motion vector, and further comprising a communication unit for transmitting a result of the encoding.
